# EUROPEAN PATENT APPLICATION

(11) **EP 4 199 509 A1**
(43) Date of publication of application: **21.06.2023**
(21) Application number: 21869603.7
(22) Date of filing: 06.09.2021
(51) Int. Cl.: H04N 13/254, H04N 13/207, H04N 13/236, H04N 13/257

(54) **3D IMAGE ACQUISITION DEVICE**

(30) Priority: 18.09.2020 KR 20200120726; 23.10.2020 KR 20200138390; 24.12.2020 KR 20200183820
(71) Applicant: Moon, Myung Il, Incheon 21331 (KR)
(72) Inventor: Moon, Myung Il, Incheon 21331 (KR)
(74) Representative: BCKIP Part mbB
(86) International application number: PCT/KR2021/011988
(87) International publication number: WO 2022/059981

(57) **Abstract**

The present invention relates to a three-dimensional image obtainment device capable of measuring a spatial structure for a target, like surrounding geographical features, an object of shooting, and so on, using just a simple movement by having a laser beam irradiation module configured to irradiate a laser beam from an inner side of a main body housing to a side of the target, a beam splitter, a TOF reception sensor, and a red-green-blue (RGB) image sensor capable of sensing a color image.

## Description

### Technical Field

The present invention relates to a three-dimensional image obtainment device, and more particularly, to a three-dimensional image obtainment device capable of obtaining an image concerning a target, like a nearby place featured geographically, an object of shooting, and so on, and measuring a spatial structure therefrom.

### Background Art

With respect to a conventional three-dimensional image obtainment device, modes, like a passive stereo vision intended for obtaining information on a distance between corresponding pixels of a target object using two cameras, and an active stereo vision resulting from substituting one camera used in this passive stereo vision by a projector, have been applied thereto. However, even though the passive stereo vision has the advantage of a high speed, since it is seriously affected by monotonous environment or nearby lighting, there is a limit to obtaining an accurate three-dimensional image, and even though the active stereo vision in which structural light based on a visible ray is used provides a three-dimensional image improved to some extent, due to a visible ray pattern, in case that the active stereo vision is used in robots for domestic use, and so on, it may be unpleasant to the eyes of people.

Thus, a time of flight (TOF) method has recently been provided in such a manner as to measure a distance between a camera and a recognition object, or depth by using a time difference between time for which light irradiated onto the recognition objection is emitted, and time for which the light reflecting from the recognition object is received, thereby obtaining a three-dimensional image.

Also, with respect to a conventional art concerning three-dimensional image obtainment, an active three-dimensional distance image measurement device in an infrared flash mode has widely been known through Korean Patent Laid-Open Publication No. 10-2005-0026949 (March 16, 2005). Thus, the art relates to the three-dimensional distance image measurement device in which an infrared light-based luminous source in a flash mode is used, and in which a digital micromirror device (DMD) intended for carrying out distance measurement in real time using various beam irradiation patterns is used, and there is a difference between this device and an image obtainment device according to the present invention capable of measuring a spatial structure by combining a color image with a TOF reception mode of receiving a laser beam in a pulse pattern received using a laser beam irradiation module configured to irradiate the laser beam, and a beam splitter, and measuring a difference in phase resulting from temporal timing.

### Detailed Description of the Invention

### Technical Problem

The present invention has been devised for solving the problems of the aforesaid conventional art, and an object thereof is to provide a three-dimensional image obtainment device which is a device in a structure having an irradiation module configured to irradiate a laser beam from an inner side of a main body housing to a side of a target, a beam splitter configured to separate infrared light and visible light from each other and refract them, a time of flight (TOF) reception sensor, and an image sensor, and which is capable of more accurately measuring a three-dimensional spatial structure for a target or providing a two-dimensional image in such a manner as to additionally combine a standard color image as well as measuring depth information in a time of flight (TOF) mode.

Also, the other object of the present invention is to provide a three-dimensional image obtainment device capable of causing an image of a three-dimensional spatial structure obtained to be outputted through a smart phone or a computing device linked via a network.

### Solution for Solving the Problem

According to one aspect of the present invention for solving the technical problems, a three-dimensional image obtainment device may comprise: a main body housing; a control part substrate mounted to a top end of an inner side of the main body housing, and configured to control reception and transmission timing of light and to transmit a sensed signal to a device of the outside; and a light transmission and reception unit disposed to send an infrared laser beam and to receive an external beam incident by being combined with the control part substrate unit, wherein the light transmission and reception unit comprises: a laser beam irradiation module configured to irradiate a laser beam onto a target; a beam splitter through which infrared light returning by reflecting from the target penetrates horizontally, and which vertically refracts viable light incident thereon; a time of flight (TOF) reception sensor configured to generate a structural image in an infrared area by receiving the infrared light penetrating through the beam splitter; an image sensor configured to generate a color image of the target by receiving the visible light refracted to a lower portion of the beam splitter; and an optical lens system disposed at a front end of the beam splitter, and composed of at least two or more lens elements.

Also, the optical lens system may be composed of a lens assembly having a fixed shape so that light can be adjusted according to each direction of the light incident on each lens element.

Also, the optical lens system according to the present invention may cause the refractive index to be adjusted so that a phase of the target is clearly focused at a position of each focal point formed at the TOF reception sensor and the image sensor.

Also, the control part substrate may comprise a three-dimensional image processing module configured to measure a three-dimensional spatial structure concerning the target by combining a structural image of the target based on light received by the TOF reception sensor with color image data on the target based on light received by the image sensor.

Also, the laser beam irradiation module may be modulated in the form of a large number of dotted arrays, thereby consisting of a vertical-cavity surface emitting laser (VCSEL) module configured to send an infrared laser beam in a pulse pattern to a side of the target in such a manner as to emit the beam from a surface, or a laser diode module configured to irradiate the laser beam to the side of the target.

According to another aspect of the present invention for solving the technical problems, a three-dimensional image obtainment device may comprise: a main body housing in which a widow having a light transmission property configured to emit a pulse laser beam from one side to the outside, and intended for enabling the penetration of light coming in from the outside is disposed; a control part substrate combined with and mounted to a bottom end of the inside of the main body housing; and a light transmission and reception unit combined with an upper portion of the control part substrate, and disposed to send an infrared laser beam and to receive external light incident thereon, wherein the light transmission and reception unit comprises: a laser beam irradiation module configured to irradiate a laser beam onto a side of a target; a beam splitter through which the infrared laser beam returning by reflecting from the target penetrates horizontally, and which vertically refracts viable light incident thereon; a time of flight (TOF) reception sensor configured to generate a structural image in an infrared area by receiving the infrared laser beam penetrating through a back end of the beam splitter; and a camera module comprising a camera lens consisting of a plurality of lens elements configured to receive the visible light refracted to a lower portion of the beam splitter, a lens drive part configured to enable the adjustment of focal points by causing the camera lens to move forward and backward in a direction of an optical axis, and an image sensor configured to generate a color image of the target.

Also, the light transmission and reception unit according to the present invention may be configured in such a structure that a front surface lens located in a direction of the window is disposed, and into one part of the front surface lens, a filter lens configured to emit the infrared laser beam emitted from the laser beam irradiation module to the outside is inserted at a fixed position of the front surface lens, or is additionally mounted to an outer side.

Also, the filter lens according to the present invention may be a band-pass filter through which only a wavelength used in a luminous source from the infrared laser beam of the laser beam irradiation module passes.

Also, the control part substrate according to the present invention may comprises: a control module configured to control a transmitting movement and a receiving movement of a laser beam by being linked with the laser beam irradiation module, the TOF reception sensor, and the camera module; and a three-dimensional image processing module configured to measure a three-dimensional spatial structure concerning the target by combining a structural image of the target based on light received by the TOF reception sensor with color image data of the target based on light received by the image sensor.

Also, the three-dimensional image processing module according to the present invention may calculate depth information on an infrared light-based structural image, and measures a three-dimensional spatial structure using algorithm that selects an image value for an image whose visibility is high in such a manner as to make a comparison between a red-green-blue (RGB) color image with a texture component.

Also, the control part substrate according to the present invention may further comprises a communication module configured to provide Wi-Fi or a local area network (LAN) connection mode intended for causing the control module to communicate with an external device.

Also, the laser beam irradiation module may be modulated in the form of a large number of dotted arrays, thereby consisting of a VCSEL module configured to send an infrared laser beam in a pulse pattern to a side of the target in such a manner as to emit the beam from a surface, or a laser diode module configured to irradiate the laser beam to the side of the target.

Also, according to the other aspect of the present invention for solving the technical problems, a three-dimensional image obtainment device may comprise: a main body housing in which a widow having a light transmission property configured to emit a pulse laser beam from one side to the outside, and intended for enabling the penetration of light coming in from the outside is disposed; a control part substrate configured to control transmission and reception timing of light by being combined with and mounted to a bottom end of the inside of the main body housing and to transmit a sensed signal to a device of the outside; and a light transmission and reception unit combined with an upper portion of the control part substrate, and disposed to send an infrared laser beam and to receive external light incident thereon, wherein the light transmission and reception unit comprises: a laser beam irradiation module configured to irradiate a laser beam onto a side of a target; a beam splitter through which the infrared laser beam returning by reflecting from the target penetrates horizontally, and which vertically refracts viable light incident thereon; a time of flight (TOF) reception sensor configured to generate a structural image in an infrared area by receiving the infrared laser beam penetrating through the beam splitter; and an image sensor configured to generate a color image of the target by receiving the visible light refracted to a lower portion of the beam splitter, and wherein the control substrate comprises a three-dimensional image processing module configured to measure a three-dimensional spatial structure concerning the target by combining a structural image of the target based on light received by the TOF reception sensor with color image data of the target based on light received by the image sensor.

### Effect of the Invention

The present invention is effective to enhance resolution on information by further having an image sensor capable of sensing a color image as well as measuring a distance concerning an object of shooting and depth information in a time of flight (TOF) mode, and to measure an accurate-three-dimensional, spatial structure concerning a target, like a nearby place featured geographically, an object of shooting, and so on, using just a simple movement, or to provide a two-dimensional image.

Also, it is advantageous in that since the information data concerning the spatial structure of the target, a nearby place featured geographically, and so on sensed from the three-dimensional image obtainment device according to the present invention can be transmitted to an external device, the data can be re-processed on a network.

Also, the three-dimensional image obtainment device according to the present invention is effective to enable the improvement of optical performance, and a design of miniaturization for products by having a front surface lens on an optical path, an optical lens system of a lens assembly capable of functioning as an optical lens intended for receiving light using just one single lens, and resulting from complexly combining lens elements in a fixed form for controlling light incident thereupon with one another.

Also, the three-dimensional image obtainment device according to the present invention is advantageous in that it can generally be applied to improving the performance of a light detection and ranging (LiDAR) device for a vehicle, and can also be applied to a mobile device that is movable, like a robot, a ship, a helicopter, a drone, and so on, and that it can also be applied to a fixed device having a limit to its movement, like a building, a pillar, a tower, and so on, without limitation.

### Brief Description of the Drawings

FIG. 1 is an external perspective view showing a main body housing of a three-dimensional image obtainment device according to one exemplary embodiment of the present invention.
FIG. 2 is an exemplary view showing an internal structure of the three-dimensional image obtainment device according to FIG. 1.
FIG. 3 is an exemplary view showing a structure of a light transmission and reception unit according to another exemplary embodiment of the present invention.
FIG. 4 is an exemplary view showing a disk-type beam splitter from the structure of the light transmission and reception unit as shown in FIG. 3 according to another exemplary embodiment of the present invention.
FIG. 5 is a block diagram showing a constitution of the three-dimensional image obtainment device according to the present invention.
FIG. 6 is a view exemplarily showing the emission of light from a surface of the three-dimensional image obtainment device having a square box form according to another exemplary embodiment of the present invention.
FIG. 7 is a view exemplarily showing the emission of light from a surface of a three-dimensional image obtainment device having a cylindrical shape according to another exemplary embodiment of the present invention.
FIG. 8 is an exemplary view for explaining a structure and a path of the whole light transmission and reception unit with respect to the light transmission and reception unit according to another exemplary embodiment of the present invention.
FIG. 9 is an exemplary view for explaining the structure of the light transmission and reception unit, and the light transmission and reception path according to another exemplary embodiment of the present invention.
FIG. 10 is a view exemplifying the emission of light from a surface of a three-dimensional image obtainment device having an optical lens system.
FIG. 11 is an exemplary view showing an internal structure of the three-dimensional image obtainment device according to FIG. 10.
FIG. 12 is an exemplary view for explaining a light transmission and reception path of the three-dimensional image obtainment device having the optical lens system according to FIG. 10.

### Mode for Carrying Out the Invention

The terms or words used in the present specification and claims should not be construed as being limited to ordinary meanings, or meanings defined in a dictionary, but should be construed as having meanings and concepts which are coincident with the technical ideas of the present invention on the basis of the principle that the inventor(s) can appropriately define concepts of the terms for describing his invention in the best mode.

Accordingly, since the exemplary embodiments described in the present specification, and the constitutions illustrated in the drawings are only the best preferable examples, and are not intended to represent all the technical ideas of the present invention, it should be understood that there could be various equivalents and modification examples which could be substituted for them.

Hereinafter, the preferable exemplary embodiments of the present invention will be described in detail with reference to the accompanying drawings as follows.

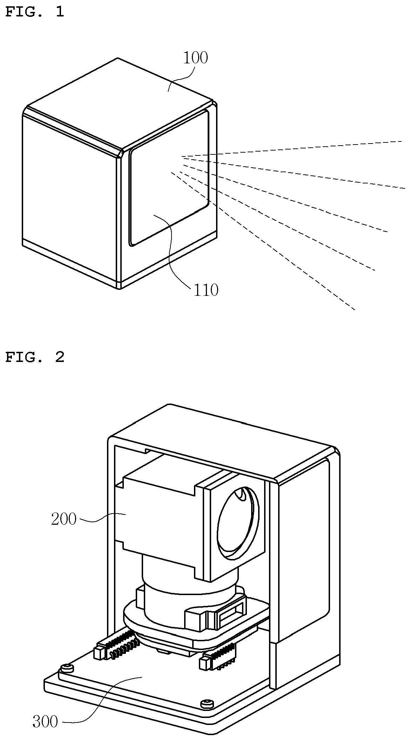

FIG. 1 is an external perspective view showing a main body housing of a three-dimensional image obtainment device according to one exemplary embodiment of the present invention.

As shown in FIG. 1, in the three-dimensional image obtainment device according to the present invention, a main body housing 100 having an airtight inside space, and a window 110 configured to emit a pulse laser beam in such a manner as to emit light from one side of the main body housing 100 to the outside, and to facilitate the transmission of light coming from the outside to the inside are disposed. The window 110 may cause the beam to easily penetrate through the inside and the outside of the three-dimensional image obtainment device, and may be composed of a member having a light transmission property for protecting the main body housing 100.

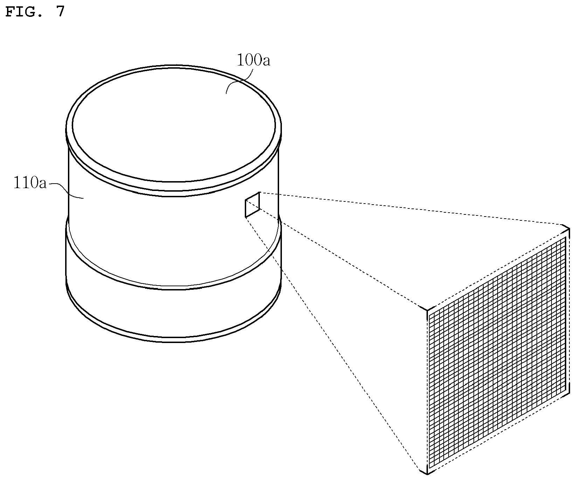

Thus, the main body housing 100 according to the present invention may be composed in a square box form having a fixed height as shown in FIG. 1, but its shape isn't limited thereto, and as shown in FIG. 7, a housing composed in a cylindrical shape may also be applicable.

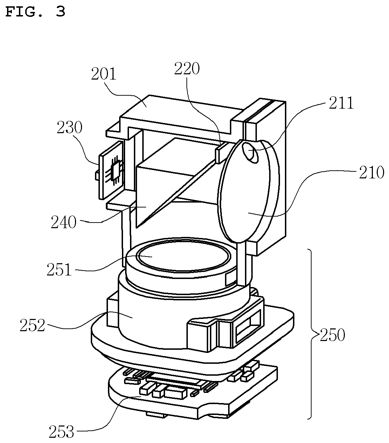

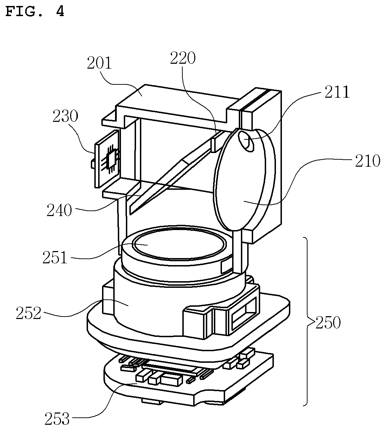

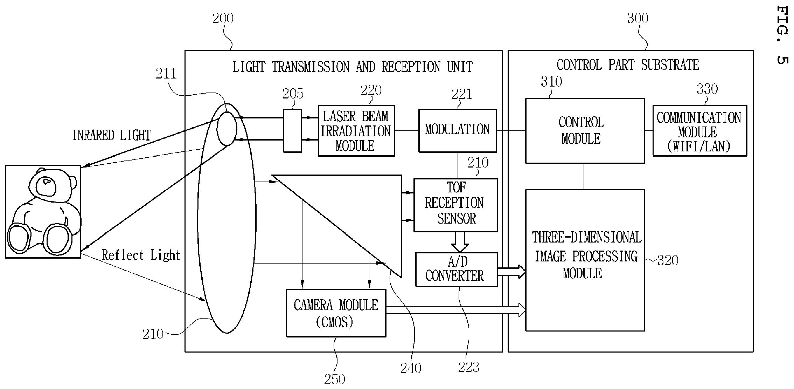

Also, FIG. 2 is an exemplary view showing an internal structure of the three-dimensional image obtainment device according to FIG. 1, FIG. 3 is an exemplary view showing a structure of a light transmission and reception unit according to another exemplary embodiment of the present invention, FIG. 4 is an exemplary view showing a disk-type beam splitter from the structure of the light transmission and reception unit shown in FIG. 3 according to another exemplary embodiment of the present invention, and FIG. 5 is a block diagram showing a constitution of the three-dimensional image obtainment device according to another exemplary embodiment of the present invention.

As illustrated, the three-dimensional image obtainment device of the present invention may comprise a control part substrate 300 combined with and mounted to a bottom end of the inside of the main body housing 100, and a light transmission and reception unit 200 configured to transmit and receive light and disposed at an upper portion of the control part substrate 300, wherein the light transmission and reception unit 200 may comprise a front surface lens 210, a laser beam radiation module 220, a beam splitter 240, a time of flight (TOF) reception sensor 230, and a camera module 250.

Also, the light transmission and reception unit 200 is protected in such a form as to be wrapped up in a unit case 201, and thus, the front surface lens 210 located in a direction of the window 110 of the main body housing 100 is disposed at a front end of the unit case 201, the beam splitter 240 configured to separate and refract beams incident thereon from the outside according to each wavelength of infrared light and visible light is furnished at a back end of the front surface lens 210, and the TOF reception sensor 230 configured to sense a wavelength band based on the infrared light is furnished at a back end in a vertical direction of the beam splitter 240.

The beam splitter 240 according to the present invention is composed, as shown in FIG. 3, in a triangular prism form, thereby forming a surface to let a beam come in, and a surface to let a beam come out, or as shown in FIG. 4, the plate-type beam splitter is used so that a surface to let a beam come in, and a surface to let a beam come out which are slightly slanting with a fixed inclination can be realized.

Also, in order to receive light in a wavelength band of visible light which the beam splitter 240 refracts in a downward direction perpendicular thereto, in a lower portion of the beam splitter 240 is provided the camera module 250 comprising: a camera lens 251 composed of a large number of lens elements; a lens drive part 252 configured to enable the adjustment of a focal point by causing the camera lens 251 to move forward and backward in the direction of an optical axis; and an image sensor 253 configured to sense a red-green-blue (RGB)-based optical signal in a wavelength band of the infrared light incident on the camera lens 251 from a lower portion of the lens drive part 252.

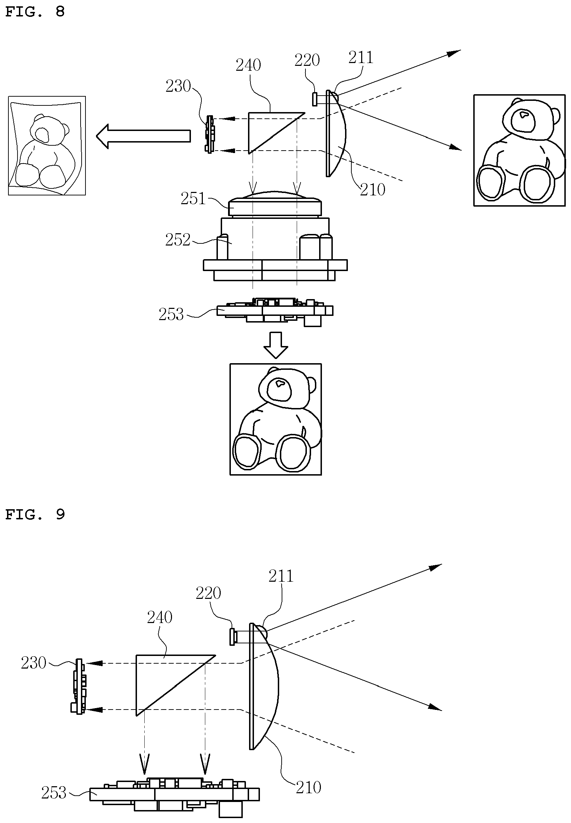

However, according to another exemplary embodiment of the present invention, as shown in FIG. 9 described later, a color image of a target may be obtained in such a manner that the beam splitter 240 causes the image sensor 253 except the camera lens 251 and the lens drive part 252 from the camera module 250 to be located in a lower portion directly.

At this time, the image sensor 253 according to the present invention may be an RGB image sensor in a complementary metal-oxide-semiconductor type which supports a fixed frame (e.g., 30 fps) and fixed resolution (e.g., 1280 x 720).

The unit case 201 according to the present invention forms a space into which fixed constituent parts are assembled and mounted, thereby functioning as a protection case which shows that the fixed constituent parts are assembled and combined with each other in an inner side, and having a sealed structure so that light emitted from the inside and light incident from the outside don't stream outside, and the front surface lens 210, the laser beam irradiation module 220, and the beam splitter 240, the TOF reception sensor 230, and the camera lens 251 of the camera module 250 are protected in such a form as to be wrapped up in the unit case 201.

At this time, the laser beam irradiation module 220 may be composed of a vertical-cavity surface emitting laser (VCSEL) module or a laser diode (LD) module.

The VCSEL module 220 is a module configured to send the laser beams of rapid pulse patterns in such a manner as to emit the beams from a surface accordingly as the vertical-cavity surface emitting laser (VCSEL) is modulated in the form of a large number of dotted arrays, and the laser diode module is a module configured to irradiate the laser beams to a side of the target.

The laser beam irradiation module 220 constituted as described above is mounted to and is located in a state of being mounted to a top end of the inside of the unit case 201 from a back end having a fixed distance from the front surface lens 210. At this time, the laser beam irradiation module 220 emits beams while switching the beams in a wavelength band of near-infrared light ranging within 940 nm on and off.

Also, as shown in FIG. 2 to FIG. 5, the laser beam irradiation module 220 may be configured in such a manner that the laser beams emitted from the surface in the pulse patterns are emitted to the outside through a part of the front surface lens 210 located at the front end, and thus a filter lens 211 may be furnished so that the part of the front surface lens 210 located at the front surface of the laser beam irradiation module 220 emits the beams emitted from the laser beam irradiation module 220 to the outside.

At this time, the filter lens 211 may be a lens configured to function as a band-pass filter configured to pass through only a wavelength used in a luminous source from a laser of the laser beam irradiation module 220 itself.

That is, the front surface lens 210 furnished in the unit case 201 entirely functions as an optical lens intended for receiving light, and in a fixed portion located at a front end of the laser beam irradiation module 220, the filter lens 211 configured to send light is configured in a structure of being inserted at a fixed position of the front surface lens 210, or is configured in such a manner as to be mounted to an outer side additionally.

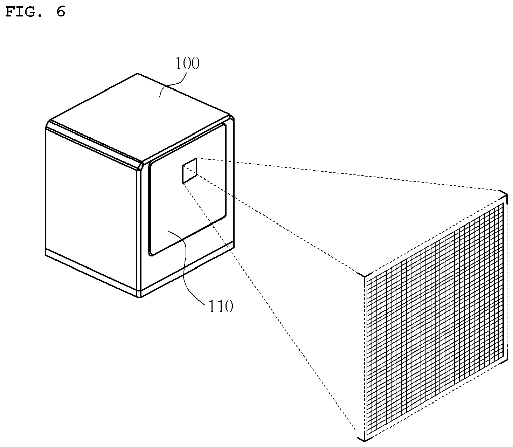

Thus, FIG. 6 is a view exemplarily showing the emission of light from a surface of the three-dimensional image obtainment device having a square box form according to another exemplary embodiment, and FIG. 7 is a view exemplarily showing the emission of light from a surface of a three-dimensional image obtainment device having a cylindrical shape according to another exemplary embodiment of the present invention, wherein the present invention can be found that beams emitted from the laser beam irradiation module 220 located at each inner side of the main body housings 100 and 100A may be irradiated in such a manner that the beams are emitted from a surface by being emitted from each specific portion of main body windows 110 and 110B to the outside.

Also, in case that the laser beam irradiation module 220 is composed of the VCSEL module, a modulation 221 configured to switch beams on and off at a very rapid interval at the time of discharging of the beams is furnished, wherein a state in which the laser beams of the laser beam irradiation module 220 are switched on is called in-phase switch, and a state in which the laser beams are switched off is called out-phase switch, and the TOF reception sensor 230 may be an infrared image sensor configured to measure a difference between the phases resulting from temporal timing by being executed so as to be accurately synchronized with a beam pulse emitted by being synchronized with an interval at which the modulation 221 switches the beams on and off, the beams reflecting and returning accordingly as each cell is composed of two pairs of sensing sensors (receptors).

That is, although a general infrared light (IR) sensor measures only intensity of a signal, and is easy to be affected by the reflexibility of a thing, since the TOF reception sensor receives infrared laser beams sent from the laser beam irradiation module, and calculates a flight time-type distance resulting therefrom, a more precise value may be obtained.

The TOF reception sensor 230 according to the present invention may provide resolution data with fixed resolution (e.g., VGA 640 x 480) at the speed of a fixed pixel pitch (e.g., 15 p of a fixed frame, for example, 150 frames as the maximum per second).

Also, in case that a signal emitted from the TOF reception sensor 230 is an analog signal, it may be transmitted to a three-dimensional (3D) image processing module 320 by being converted to a digital signal through an analog to digital converter (ADC) 223.

As shown in FIG. 5, the control part substrate 300 according to the present invention comprises: a control module 310 configured to control sending of beams in order to apply a driving signal intended for rapidly switching pulse-type laser beams of the laser beam irradiation module 220 on and off, and to control the camera module 250 in order to carry out a function of adjusting a focal point for the image sensor 253 configured to receive beams in the area of visible light; and a three-dimensional (3D) image processing module 320 configured to measure a three-dimensional spatial structure for a target by receiving image data on the target, such as a nearby place featured geographically, an object of shooting, and so on, in such a manner as to be linked with the TOF reception sensor 230 and the image sensor 253, and by combining them with each other.

That is, the three-dimensional (3D) image processing module 320 performs a process of pre-processing for removing a noise by receiving image data on the target, calculates depth information on a twisted structural image in an infrared area concerning the target resulting from light received by the TOF reception sensor 230, and also performs an algorithm process of uniting two images in such a manner as to select image values resulting from high visibility of the images by comparing a color image received by the image sensor 253 with a texture component. The three-dimensional spatial structure for the target may accurately be measured based on the images combined with each other through the algorithm. At this time, the three-dimensional (3D) image processing module 320 may generate two-dimensional image data using a result of measurement on the three-dimensional image or the three-dimensional spatial structure constituted as described above, thereby enabling processing of more various images and providing of more various kinds of image information.

For this, the control part substrate 300 may be realized with at least one device selected from a logic circuit, a programming logic controller, a microcomputer, microprocessor, and so on, and may also be realized with a field-programmable logic array (FPGA) board in which said devices are united.

Also, the control part substrate 300 may separately have a communication module 330 for a communication connection means intended to connect wireless Wi-Fi or a wired local area network, or may be composed in a state of being combined therewith integrally. The communication module 330 may communicate with a user mobile device, like a personal computer (PC) or smart phone of a user of the outside, via the Intranet, the Internet, a vehicle network, and so on, and may transmit information data on a target, like a nearby place featured geographically and sensed, an object of shooting, and so on, to this user device. This is intended to provide convenience so that the data can be re-processed by being converted to a digital image through the user computing device linked via an external network, like the Internet.

Meanwhile, the control part substrate 300 may have electrical wiring or an adapter for power supply of the three-dimensional image obtainment device according to the present invention, or a power supply means, wherein the power supply means may be furnished in a power device which is intended for internal power, or which can be recharged.

FIG. 8 is an exemplary view for explaining a structure and a path of the whole light transmission and reception unit with respect to the light transmission and reception unit according to another exemplary embodiment of the present invention, and shows that beams emitted from the laser beam irradiation module 220, which emits infrared light in such a manner as to emit the light from a surface, are applied onto a target by passing through the filter lens 211, and infrared light and visible light incident by reflecting from the target are separated from each other by the beam splitter 240, and that the TOF reception sensor 230 which receives the infrared light generates a twisted structural image due to the form of a large amount of dotted laser beams, and the image sensor 253 which the visible light receives light in such a manner as to adjust a focal point through the camera lens 251 and the camera drive part 252 of the camera module 250 also generates a color image of the target.

Also, FIG. 9 is an exemplary view for explaining the structure of the light transmission and reception unit, and the light transmission and reception path according to another exemplary embodiment of the present invention, thereby showing a difference between the drawing and FIG. 8 which is that a color image of the target may be generated in such a manner that the image sensor 253 receives visible light directly even though a process of adjusting a focal point is not performed by the camera lens 251 and the lens drive part 252 of the camera module 250. This is advantageous in that, as shown in FIG. 9, since the image sensor 253 receives the visible light directly, it isn't required to apply the camera lens 251 and the lens drive part 252 of the camera module 250 so that the number of electrical circuits is minimized, and thus volume and costs can be reduced.

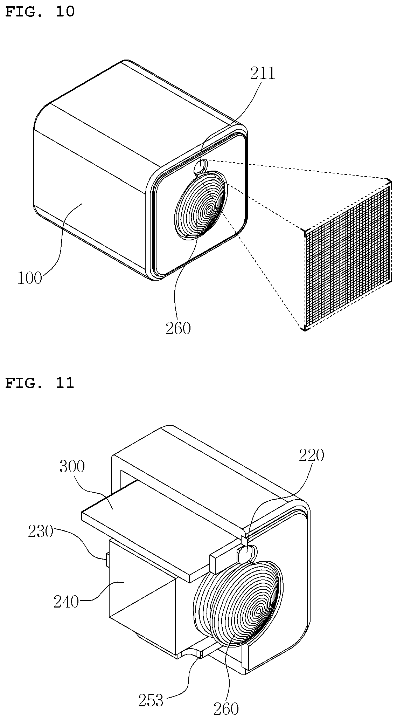

Also, FIG. 10 to FIG. 12 show, according to the other exemplary embodiment of the present invention, the three-dimensional image obtainment device in which an optical lens system 260 is furnished on a front surface of the beam splitter 240 in the light of an optical path.

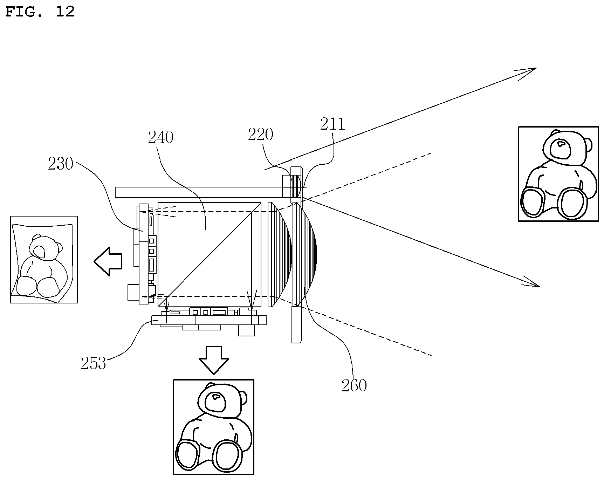

Thus, FIG. 10 is a view exemplifying the emission of light from a surface of the three-dimensional image obtainment device having the optical lens system at the front end of the beam splitter, FIG. 11 is an exemplary view showing an internal structure of the three-dimensional image obtainment device according to FIG. 10, and FIG. 12 is an exemplary view for explaining a light transmission and reception path of the three-dimensional image obtainment device having the optical lens system according to FIG. 10.

According to the exemplary embodiment which refer to FIG. 10 to FIG. 12, with respect to a structure of the light transmission and reception unit according to the present invention, it is intended for providing a front surface lens functioning as the optical lens system 260 in which two or more lenses configured to perform a complex function instead of the front surface lens 210 simply composed of one single lens furnished in the unit case 201 as shown in the aforesaid exemplary embodiment are constituted and arranged in elements.

That is, even though the function of the optical lens for receiving light may be performed by just one single lens, rather than it, the optical lens system 260 functioning as a lens assembly in a fixed form which controls the light in respective directions of the lens elements in order to control the incident light is furnished, so it may be possible to improve optical performance in the light of an optical path, and to carry out the design of miniaturization for products.

Thus, an incident angle of light concerning a neighboring object of shooting increases on the basis of an optical axis, the more the object of shooting is located at a long distance, the more the incident angle approaches on a level with the optical axis, so focal points formed on the TOF reception sensor 230 and the image sensor 253 may become different, and thanks to the constitution of the optical lens system 260 mounted as shown in the present invention, since the refractive index of light passing through the lens is adjusted according to a position of the object of shooting, a phase may clearly be focused at each position of focal points formed at the TOF reception sensor 230 and the image sensor 253.

In the three-dimensional image obtainment device according to the exemplary embodiment resulting therefrom, as show in FIG. 11 to FIG. 10, the laser beam irradiation module 220 and the lens 211 may be mounted to and located at a top end of the inside of the unit case 201 so that beams emitted from the laser beam irradiation module 220 can be irradiated directly. At this time, the laser beam irradiation module 220 may be connected to the control part substrate 300 from the top end of the inside of the unit case 201.

That is, according to the present exemplary embodiment described based on FIG. 12, a beam of infrared light emitted from the laser beam irradiation module 220 configured to emit the infrared light in such a manner as to emit the light from a surface according to a structure of the light transmission and reception unit is irradiated onto the target by passing through the lens 211, and a beam incident by reflecting from the target passes through the optical lens system 260 so that the infrared light and the visible light are separated from each other by the beam splitter 249, and phases of the target are clearly focused onto the TOF reception sensor 230 and the image sensor 253 located on each path.

At this time, the TOF reception sensor 230 which receives infrared light may generate the twisted structural image due to the form of a large amount of dotted laser beams projected, and the image sensor 253 which receives visible light may generate the color image of the target.

As previously described, the three-dimensional image obtainment device according to present invention may be configured in such a manner as to unite constitutions based on various exemplary embodiments together and may be configured in such a manner as to selectively use each constitution according to preferable exemplary embodiments. That is, it is to be understood that various modifications and alternations of the present invention can be made by those having ordinary skill in the technical field to which the present invention pertains without deviating from the spirit and the scope of the present invention described in the appended claims.

## Claims

1. A three-dimensional image obtainment device, with respect to the device which obtains a three-dimensional image, comprising:
a main body housing;
a control part substrate mounted to a top end of an inner side of the main body housing, and configured to control reception and transmission timing of light and to transmit a sensed signal to a device of the outside; and
a light transmission and reception unit disposed to send an infrared laser beam and to receive an external beam incident by being combined with the control part substrate unit,
wherein the light transmission and reception unit comprises:
a laser beam irradiation module configured to irradiate a laser beam onto a target;
a beam splitter through which infrared light returning by reflecting from the target penetrates horizontally, and which vertically refracts viable light incident thereon;
a time of flight (TOF) reception sensor configured to generate a structural image in an infrared area by receiving the infrared light penetrating through the beam splitter;
an image sensor configured to generate a color image of the target by receiving the visible light refracted to a lower portion of the beam splitter; and
an optical lens system disposed at a front end of the beam splitter, and composed of at least two or more lens elements.

2. The three-dimensional image obtainment device of claim 1, wherein the optical lens system is composed of a lens assembly having a fixed shape so that light incident on each lens element can be adjusted.

3. The three-dimensional image obtainment device of claim 2, wherein the optical lens system causes the refractive index to be adjusted so that a phase of the target is clearly focused at a position of each focal point formed at the TOF reception sensor and the image sensor.

4. The three-dimensional image obtainment device of claim 1, wherein the control part substrate comprises a three-dimensional image processing module configured to measure a three-dimensional spatial structure concerning the target by combining a structural image of the target based on light received by the TOF reception sensor with color image data on the target based on light received by the image sensor.

5. The three-dimensional image obtainment device of claim 1, wherein the laser beam irradiation module is modulated in the form of a large number of dotted arrays, thereby consisting of a vertical-cavity surface emitting laser (VCSEL) module configured to send an infrared laser beam in a pulse pattern to a side of the target in such a manner as to emit the beam from a surface, or a laser diode module configured to irradiate the laser beam to the side of the target.

6. A three-dimensional image obtainment device, comprising:
a main body housing in which a widow having a light transmission property configured to emit a pulse laser beam from one side to the outside, and intended for enabling the penetration of light coming in from the outside is disposed;
a control part substrate configured to control transmission and reception timing of light by being combined with and mounted to a bottom end of the inside of the main body housing and to transmit a sensed signal to a device of the outside; and
a light transmission and reception unit combined with an upper portion of the control part substrate, and disposed to send an infrared laser beam and to receive external light incident thereon,
wherein the light transmission and reception unit comprises:
a laser beam irradiation module configured to irradiate a laser beam onto a side of a target;
a beam splitter through which the infrared laser beam returning by reflecting from the target penetrates horizontally, and which vertically refracts viable light incident thereon;
a time of flight (TOF) reception sensor configured to generate a structural image in an infrared area by receiving the infrared laser beam penetrating through the beam splitter; and
an image sensor configured to generate a color image of the target by receiving the visible light refracted to a lower portion of the beam splitter.

7. The three-dimensional image obtainment device of claim 6, wherein the light transmission and reception unit is configured in such a structure that a front surface lens located in a direction of the window is disposed, and into one part of the front surface lens, a filter lens configured to emit the infrared laser beam emitted from the laser beam irradiation module to the outside is inserted at a fixed position of the front surface lens, or is additionally mounted to an outer side.

8. The three-dimensional image obtainment device of claim 7, wherein the filter lens is a band-pass filter through which only a wavelength used in a luminous source from the infrared laser beam of the laser beam irradiation module passes.

9. The three-dimensional image obtainment device of claim 6, wherein the control part substrate comprises a three-dimensional image processing module configured to measure a three-dimensional spatial structure concerning the target by combining a structural image of the target based on light received by the TOF reception sensor with color image data of the target based on light received by the image sensor.

10. The three-dimensional image obtainment device of claim 6, wherein the laser beam irradiation module is modulated in the form of a large number of dotted arrays, thereby consisting of a VCSEL module configured to send an infrared laser beam in a pulse pattern to a side of the target in such a manner as to emit the beam from a surface, or a laser diode module configured to irradiate the laser beam to the side of the target.

11. A three-dimensional image obtainment device, comprising:
a main body housing in which a widow having a light transmission property configured to emit a pulse laser beam from one side to the outside, and intended for enabling the penetration of light coming in from the outside is disposed;
a control part substrate configured combined with and mounted to a bottom end of the inside of the main body housing; and
a light transmission and reception unit combined with an upper portion of the control part substrate unit, and disposed to send an infrared laser beam, and to receive external light incident thereon,
wherein the light transmission and reception unit comprises:
a laser beam irradiation module configured to irradiate a laser beam onto a side of a target;
a beam splitter through which the infrared laser beam returning by reflecting from the target penetrates horizontally, and which vertically refracts viable light incident thereon;
a time of flight (TOF) reception sensor configured to generate a structural image in an infrared area by receiving the infrared laser beam penetrating through the beam splitter; and
a camera module comprising a camera lens consisting of a plurality of lens elements configured to receive the visible light refracted to a lower portion of the beam splitter, a lens drive part configured to enable the adjustment of focal points by causing the camera lens to move forward and backward in a direction of an optical axis, and an image sensor configured to generate a color image of the target.

12. The three-dimensional image obtainment device of claim 11, wherein the light transmission and reception unit is configured in such a structure that a front surface lens located in a direction of the window is disposed, and into one part of the front surface lens, a filter lens configured to emit the infrared laser beam emitted from the laser beam irradiation module to the outside is inserted at a fixed position of the front surface lens, or is additionally mounted to an outer side.

13. The three-dimensional image obtainment device of claim 11, wherein the filter lens is a band-pass filter through which only a wavelength used in a luminous source from the infrared laser beam of the laser beam irradiation module passes.

14. The three-dimensional image obtainment device of claim 11, wherein the control part substrate comprises: a control module configured to control a transmitting movement and a receiving movement of a laser beam by being linked with the laser beam irradiation module, the TOF reception sensor, and the camera module; and a three-dimensional image processing module configured to measure a three-dimensional spatial structure concerning the target by combining a structural image of the target based on light received by the TOF reception sensor with color image data of the target based on light received by the image sensor.

15. The three-dimensional image obtainment device of claim 13, wherein the three-dimensional image processing module calculates depth information on an infrared light-based structural image, and measures a three-dimensional spatial structure using algorithm that selects an image value for an image whose visibility is high in such a manner as to make a comparison between a red-green-blue (RGB) color image with a texture component.

16. The three-dimensional image obtainment device of claim 15, wherein the control part substrate further comprises a communication module configured to provide Wi-Fi or a local area network (LAN) connection mode intended for causing the control module to communicate with an external device.

17. The three-dimensional image obtainment device of claim 11, wherein the laser beam irradiation module is modulated in the form of a large number of dotted arrays, thereby consisting of a VCSEL module configured to send an infrared laser beam in a pulse pattern to a side of the target in such a manner as to emit the beam from a surface, or a laser diode module configured to irradiate the laser beam to the side of the target.
